# EUROPÄISCHE PATENTSCHRIFT

(11) **EP 1 158 638 B1**
(45) Veröffentlichungstag und Bekanntmachung des Hinweises auf die Patenterteilung: **30.07.2003**
(21) Anmeldenummer: 00401518.6
(22) Anmeldetag: 26.05.2000
(51) Int. Cl.: H02G 15/103, H02G 15/184

(54) **Anordnung zum elektrisch leitenden Verbinden der Leiter von zwei Hochspanungskabeln**
Arrangement for electrically connecting conductors of two high voltage cables
Ensemble de connexion électrique de conducteurs de deux câbles haute tension

(43) Veröffentlichungstag der Anmeldung: 28.11.2001
(73) Patentinhaber: Nexans, 75008 Paris (FR)
(72) Erfinder: Aue, Volker, Dipl.-Ing., 44137 Dortmund (DE); Rosebrock, Wilfried, Dipl.-Ing., 29699 Bomlitz (DE)
(74) Vertreter: Döring, Roger, Dipl.-Ing.

(56) Entgegenhaltungen:
- EP-A- 0 595 708
- EP-A- 0 844 687
- EP-A- 0 886 340
- WO-A-86/02210
- US-A- 3 864 013
- US-A- 4 034 151

## Beschreibung

Die Erfindung bezieht sich auf eine Anordnung zum elektrisch leitenden Verbinden der Leiter von zwei Hochspannungskabeln, welche von einer inneren Leiterglättung, einer darüber liegenden Isolierung und einer auf derselben angebrachten äußeren Leitschicht umgeben sind, bei welcher über den beiden abisolierten Enden der miteinander fluchtenden Leiter ein elektrisch gut leitendes, metallisches Rohr angeordnet und mechanisch fest mit beiden Leitern verbunden ist und bei welchem in den Isolierungen der Leiter jeweils mit Abstand von ihrem Ende in einem im Durchmesser reduzierten Bereich eine nach außen offene, ringförmige Nut angebracht ist, in welche ein zugfestes Element eingreift.

Eine derartige gemäß dem Oberbegriff des Anspruchs 1 beschriebene Anordnung ist aus EP 0 844 687 A1 bekannt.

Diese Anordnung wird bei der Verbindung von zwei Hochspannungskabeln innerhalb einer Verbindungsmuffe eingesetzt. Die Verbindungsmuffe selbst ist in heutiger Technik üblicherweise ein vorgefertigtes Bauteil. Sie wird vor dem Verbinden der Leiter im aufgeweiteten Zustand auf eines der zu verbindenden Kabel aufgeschoben und dort "geparkt". Eine Verbindungsmuffe besteht beispielsweise aus einem Formkörper aus elastomerem Material, wie Silikon-Kautschuk, in den eine leitfähige Abschirmung für die Verbindungsstelle der Leiter der beiden zu verbindenden Kabel eingebettet ist. Sie ist außerdem mit einer leitfähigen äußeren Beschichtung zum Kontaktieren der äußeren Leitschichten der beiden Kabel versehen. In Montageposition umschließt die Verbindungsmuffe die Verbindungsstelle der beiden Leiter und die anschließenden Enden der mit der äußeren Leitschicht versehenen Isolierungen der beiden Leiter mit Preßsitz. Eine gleichmäßige Verteilung des elektrischen Feldes im Bereich der Verbindungsmuffe ist dann sichergestellt.

Bei der Anordnung nach der eingangs erwähnten EP 0 844 687 A1 sind die elektrischen Leiter mittels einer Preßhülse miteinander verbunden. Über der Preßhülse ist eine rohrförmige, Durchgangsbohrungen zum Verpressen der Preßhülse mit den Leitern aufweisende Matrize angeordnet. Preßhülse und Leiter können auf einfache Weise mittels Preßdornen verpreßt werden, die durch die Durchgangslöcher der Matrize geführt und mechanisch beaufschlagt werden. Die Matrize füllt außerdem den zwischen der Preßhülse und der über der Verbindungsstelle der Leiter anzubringenden Verbindungsmuffe nach deren Montage bestehenden Zwischenraum aus. Sie greift an beiden Enden in Nuten ein, welche in den Isolierungen der beiden Leiter angebracht sind. Es kann dadurch verhindert werden, daß die Isolierungen der beiden Kabel sich durch Schrumpfung von der Verbindungsstelle wegbewegen. In Montageposition liegt die Abschirmung der Verbindungsmuffe fest an der Matrize und an den äußeren Leitschichten der beiden Kabel an.

Der Erfindung liegt die Aufgabe zugrunde, die eingangs geschilderte Anordnung weiter zu vereinfachen.

Diese Aufgabe wird gemäß der Erfindung dadurch gelöst,
- daß die Wandstärke des Rohres zumindest annähernd gleich der Wandstärke der Isolierungen der beiden Leiter ist,
- daß in den beiden im Durchmesser reduzierten Endbereichen des Rohres je eine nach außen offene, umlaufende Nut angebracht ist und
- daß an beiden Enden des Rohres ein als Rohrstück ausgebildetes, zugfestes Ankerelement angebracht ist, das jeweils einerseits in die Nut der Isolierung und andererseits in die Nut des Rohres eingreift und dessen äußere Oberfläche sowohl mit dem Rohr als auch mit der jeweiligen Isolierung bündig abschließt.

Diese Anordnung benötigt für die elektrisch leitende Verbindung der Leiter nur ein Bauteil, nämlich das mit den Leitern fest zu verbindende Rohr. Die äußere Oberfläche des Rohres liegt zumindest annähernd auf der Höhe der Isolierungen der beiden Leiter, so daß kein zusätzlicher Füllkörper benötigt wird. Die Anordnung ist mit besonderem Vorteil zum Verbinden von Hochspannungskabeln mit reduzierter Wandstärke der Isolierung geeignet. Der Querschnitt des Rohres muß nu. so bemessen sein, daß die vom Querschnitt der Leiter abhängige Stromtragfähigkeit sichergestellt ist. Hochspannungskabel mit reduzierter Wandstärke werden beispielsweise für den Bereich von 50 kV bis 110 kV durch den Einsatz von höher belastbaren Materialien immer häufiger verwendet. Die zugfeste Verbindung zwischen Rohr und Isolierungen ist ebenfalls sehr einfach ausgeführt. Die Ankerelemente brauchen nach Befestigung des Rohres an den Leitern nur noch in die Nuten von Rohr und Isolierungen eingesetzt zu werden. Das kann mit insgesamt vorgefertigten Nuten direkt erfolgen. Wenn das Rohr beim Befestigen an den Leitern, beispielsweise durch Pressen, geringfügig verlängert wird, ist es zweckmäßig, die Nuten in den Isolierungen erst nachträglich anzubringen und dann die Ankerelemente einzusetzen. In beiden Fällen machen sich Maßschwankungen nicht wesentlich bemerkbar, da das "zugfeste Element" auf zwei Ankerelemente aufgeteilt ist, bei deren Montage geringe Maßabweichungen im Abstand zwischen den Nuten leicht ausgeglichen werden können. Die Ankerelemente schließen außerdem bündig sowohl mit den Isolierungen der Leiter als auch mit dem Rohr ab. Es ergibt sich dadurch insgesamt eine gleichförmige Anlagefläche für die Verbindungsmuffe bzw. für deren Abschirmung.

Mit den Ankerelementen können auch kleine Unterschiede der Außendurchmesser des Rohres einerseits und der Isolierungen der Leiter andererseits absatzfrei ausgeglichen werden. Die Umfangsfläche der Ankerelemente verläuft gegebenenfalls konisch.

Das Material des Rohres wird auf das Material der Leiter der zu verbindenden Kabel abgestimmt. Es besteht also beispielsweise entweder aus Kupfer oder aus Aluminium.

Ausführungsbeispiele des Erfindungsgegenstandes sind in den Zeichnungen dargestellt.

Es zeigen:
Fig. 1 in schematischer Darstellung eine Verbindungsstelle zwischen zwei Hochspannungskabeln teilweise im Schnitt.
Fig. 2 bis 4 drei unterschiedliche Ausführungsformen der Anordnung noch der Erfindung.
Fig. 5 und 6 eine Einzelheit der Anordnung in zwei Varianten.

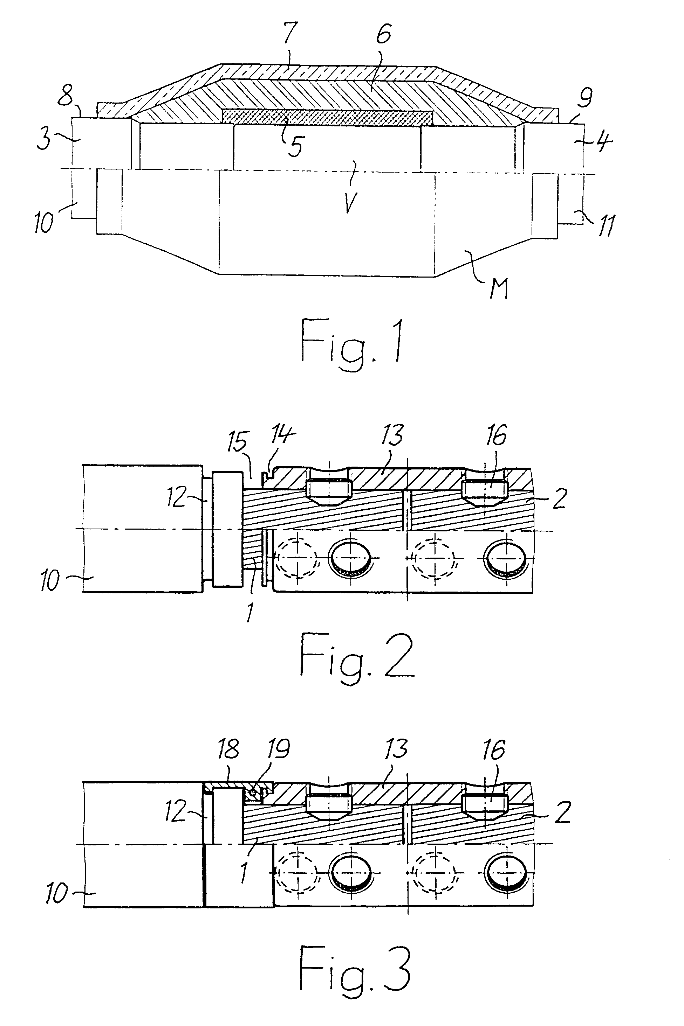

Die aus den Fig. 2 bis 6 ersichtlichen Leiter 1 und 2 von zwei Hochspannungskabeln 3 und 4 - im folgenden Kabel 3 und 4 genannt - sind durch ein Verbindungselement V miteinander verbunden, dessen genauerer Aufbau aus den Fig. 2 bis 6 hervorgeht. Die Leiter 1 und 2 können mehrdrähtig oder massiv sein. Sie können rund oder segmentförmig ausgeführt sein. Sie können aus Kupfer oder Aluminium bestehen. Über der Verbindungsstelle ist eine Verbindungsmuffe M angebracht, die beispielsweise als vorgefertigtes Bauteil aus einer leitfähigen Abschirmung 5, einem Formkörper 6 aus elastischem Isoliermaterial und einer leitfähigen äußeren Beschichtung 7 besteht. Die Beschichtung 7 hat elektrisch leitenden Kontakt mit äußeren Leitschichten 8 und 9 der beiden Kabel 3 und 4, welche deren Isolierungen 10 und 11 umgeben. Als Material für die Isolierungen 10 und 11 wird vorzugsweise vernetztes Polyethylen verwendet. Die Verbindungsmuffe M sitzt mit Preßsitz auf den von ihr umschlossenen Teilen.

Zur Verbindung der beiden Leiter 1 und 2 werden zunächst die Isolierungen 10 und 11 mit ihren äußeren Leitschichten 8 und 9 sowie nicht dargestellten, an den Leitern anliegenden Leiterglättungen mit einem Radialschnitt durchtrennt und von den Leitern 1 und 2 entfernt. Die weitere Behandlung der Kabelenden wird für das in den Zeichnungen dargestellte Kabel 3 beschrieben. Das Kabel 4 wird analog dazu bearbeitet:

Das Ende der Isolierung 10 wird auf einer vorgegebenen Länge im Durchmesser reduziert. Danach wird, vorzugsweise am Ende des reduzierten Bereichs, eine Nut 12 in der Isolierung 10 angebracht. Auf eines der Kabel 3 oder 4 kann dann eine vorgefertigte Verbindungsmuffe M in aufgeweitetem Zustand aufgeschoben werden. Anschließend werden die beiden miteinander fluchtenden Leiter 1 und 2 in ein Rohr 13 eingesteckt, dessen Innendurchmesser dem Außendurchmesser der Leiter 1 und 2 entspricht. Das Rohr 13 besteht vorzugsweise aus dem gleichen Material wie die Leiter 1 und 2. Es hat an beiden Enden mit definiertem Abstand von seinen Stirnseiten eine umlaufende, nach außen offene Nut 14. Der zwischen Nut 14 und der jeweiligen Stirnseite des Rohres 13 liegende Bereich desselben ist im Durchmesser reduziert.

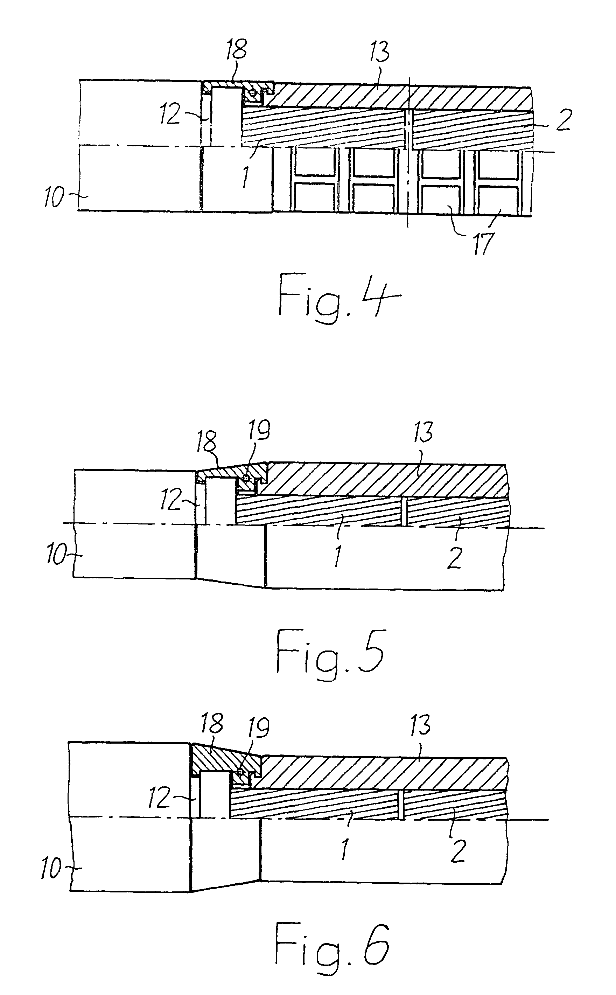

Das Rohr 13 wird etwa mittig zwischen den Stirnseiten der Isolierungen 10 und 11 der beiden Kabel 3 und 4 angebracht, so daß auf beiden Seiten ein Zwischenraum 15 verbleibt. In dieser Position wird das Rohr 13 fest mit den Leitern 1 und 2 verbunden. Das kann gemäß Fig. 2 mittels Schrauben 16 erfolgen. Das Rohr 13 kann aber auch auf die Leiter 1 und 2 aufgepreßt werden, was in Fig. 4 durch die Rechtecke 17 angedeutet sein soll.

Nach der Festlegung des Rohres 13 auf den Leitern 1 und 2 wird an beiden Enden desselben ein Ankerelement 18 montiert, das als Rohrstück ausgeführt ist. Es greift in Montageposition mit nach innen weisenden Kragen umlaufend einerseits in die Nut 12 der Isolierung 10 und andererseits in die Nut 14 des Rohres 13 ein. Das Ankerelement 18 liegt dabei an den im Durchmesser reduzierten Bereichen von Isolierung 10 und Rohrstück 13 an. Die Wandstärke des Ankerelements 18 entspricht dabei der halben Durchmesserdifferenz der reduzierten Bereiche von Isolierung 10 und Rohr 13 gegenüber deren nicht reduzierten Bereichen. Das Ankerelement 18 besteht aus mechanisch stabilem Material, vorzugsweise aus Metall. Es ist geteilt, damit es um die Verbindungsstelle herumgelegt werden kann. In Montageposition kann das Ankerelement 18 beispielsweise durch eine Schraubverbindung 19 zu einem geschlossenen Rohrstück verbunden werden. In bevorzugter Ausführungsform besteht das Ankerelement 18 aus zwei miteinander verbindbaren Halbschalen.

In den Ausführungsbeispielen nach den Fig. 2 bis 4 hat das Rohrstück 13 die gleiche Wandstärke wie die Isolierung 10. Das Ankerelement 18 hat dann eine zylindrische äußere Oberfläche. Es ist in seiner Wandstärke so bemessen, daß es bündig mit der Isolierung 10 und dem Rohr 13 abschließt. Es liegt dann in Montageposition eine gleichförmige, absatzfreie Oberfläche mit Isolierung 10, Ankerelement 18 und Rohr 13 vor, auf welcher abschließend die Verbindungsmuffe M angebracht wird.

Wenn die Wandstärken von Rohrstück 13 einerseits und Isolierung 10 andererseits voneinander abweichen, wird das Ankerelement 18 mit schräg verlaufender Umfangsfläche konisch ausgeführt. Es schließt auch dann sowohl mit dem Rohrstück 13 als auch mit der Isolierung 10 bündig ab, so wie es in den Fig. 5 und 6 dargestellt ist.

Auch so ergibt sich eine gleichförmige, absatzfreie Anlagefläche für die Verbindungsmuffe M. Bei der Ausführungsform nach Fig. 5 ist die Wandstärke des Rohres 13 größer als die der Isolierung 10. Fig. 6 zeigt eine Ausführungsform, bei welcher die Wandstärke des Rohres 13 kleiner als die der Isolierung 10 ist.

Die beschriebene Anordnung ist nicht auf die Verwendung einer vorgefertigten Verbindungsmuffe M beschränkt. Die Verbindungsmuffe könnte nach Fertigstellung der Verbindungsstelle auch über derselben aufgebaut werden.

## Patentansprüche

1. Anordnung zum elektrisch leitenden Verbinden der Leiter (1,2) von zwei Hochspannungskabeln (3,4), welche von einer inneren Leiterglättung, einer darüber liegenden Isolierung (10,11) und einer auf derselben angebrachten äußeren Leitschicht umgeben sind, bei welcher in Gebrauchslage über den beiden abisolierten Enden der miteinander fluchtenden Leiter (1,2) ein elektrisch gut leitendes, metallisches Rohr (13) angeordnet und mechanisch fest mit beiden Leitern verbunden ist und bei welcher in den Isolierungen (10,11) der Leiter jeweils mit Abstand von ihrem Ende in einem im Durchmesser reduzierten Bereich eine nach außen offene, ringförmige Nut (12) angebracht ist, in welche ein zugfestes Element eingreift, **dadurch gekennzeichnet**,
- daß die Wandstärke des Rohres (13) zumindest annähernd gleich der Wandstärke der Isolierungen (10,11) der beiden Leiter (1,2) ist,
- daß in den beiden im Durchmesser reduzierten Endbereichen des Rohres (13) je eine nach außen offene, umlaufende Nut (14) angebracht ist und
- daß an beiden Enden des Rohres (13) ein als Rohrstück ausgebildetes, zugfestes Ankerelement (18) angebracht ist, das jeweils einerseits in die Nut (12) der jeweiligen Isolierung (10,11) und andererseits in die Nut (14) des Rohres (13) eingreift und dessen äußere Oberfläche sowohl mit dem Rohr (13) als auch mit der jeweiligen Isolierung (10,11) bündig abschließt.

2. Anordnung nach Anspruch 1, **dadurch gekennzeichnet, daß** die Umfangsfläche der Ankerelemente (18) geradlinig ausgebildet ist.

3. Anordnung nach Anspruch 1 oder 2, **dadurch gekennzeichnet, daß** die Ankerelemente (18) mit schräg verlaufender Umfangsfläche konisch ausgeführt sind.

4. Anordnung nach einem der Ansprüche 1 bis 3, **dadurch gekennzeichnet, daß** jedes Ankerelement (18) aus zwei miteinander verbindbaren Halbschalen besteht.

5. Anordnung nach einem der Ansprüche 1 bis 4, **dadurch gekennzeichnet, daß** das Rohr (13) mit den Leitern (1,2) verschraubt ist.

6. Anordnung nach einem der Ansprüche 1 bis 4, **dadurch gekennzeichnet, daß** das Rohr (13) mit den Leitern (1,2) verpreßt ist.

## Claims

1. An arrangement to make an electrically conducting connection between the conductors (1, 2) of two high voltage transmission lines (3, 4), which are surrounded by an inner conductor smoothing layer, an insulation (10, 11) around it, and an outer conducting layer attached to it, wherein in application position over the two bare ends of the flush conductors (1, 2), there is a tube (13) with good electrical conductivity, which is connected firmly to the two conductors and wherein in the insulations (10, 11) of the conductors, an annular groove (12) that is open on the outside is provided at a certain distance from the end at an area that is reduced in diameter, and an element with tensile rigidity reaches into the groove, **characterized in that**
- the wall thickness of the tube (13) is at least approximately equal to the wall thickness of the insulations (10, 11) of the two conductors (1, 2),
- an annular groove (14) is provided, that is open on the outside in the two end sections of the tube (13), which have been reduced in diameter, and
- a tube-like anchor element (18) that is resistant to tensile strength is attached to both ends of the tube (13), wherein the anchor element (18) reaches into the groove (12) of the insulation (10, 11) on one side and into the groove (14) of the tube (13) on the other side and the outer surface of the element is flush with the tube (13) as well as the respective insulation (10, 11).

2. An arrangementa ccording to claim 1, characterized in thatt he circumference surface of the anchor elements (18) is straight.

3. An arrangement according to claim 1 or 2, **characterized in that** the anchor elements (18) are designed conically with angled circumference surfaces.

4. An arrangement according to one of the claims 1 to 3, **characterized in that** each anchor element (18) consists of two connectable half cups.

5. An arrangement according to one of the claims 1 to 4, **characterized in that** the tube (13) is screwed to the conductors (1, 2).

6. An arrangement according to one of the claims 1 to 4, **characterized in that** the tube (13) is pressed to the conductors (1, 2).

## Revendications

1. Dispositif destiné à relier électriquement les conducteurs (1, 2) de deux câbles haute tension (3,4) entourés d'un lissage intérieur, d'une isolation (10, 11) placée par dessus et d'une couche conductrice extérieure appliquée sur celle-ci, par dessus les deux extrémités dénudées et alignées des conducteurs (1,2 ,),un tube métallique (13) bon conducteur électrique est disposé et relié mécaniquement aux deux conducteurs, et sur lequel est prévue, dans les isolations (10, 11) des conducteurs, à une certaine distance de chaque extrémité, dans une zone de diamètre réduit, une gorge circulaire (12) ouverte vers l'extérieur, dans laquelle s'engage un élément résistant à la traction **caractérisée par le fait,**
- **que** l'épaisseur du tube (13) est pratiquement identique à l'épaisseur des isolations (10, 11) des deux conducteurs (1, 2).
- **qu'**aux deux extrémités à diamètre réduit du tube (13), une gorge circulaire (14), ouverte vers l'extérieur est prévue de chaque côté, et
- **qu'**aux deux extrémités du tube (13) est fixé un élément d'ancrage (18), résistant à la traction, en forme de tube et qui s'engage des deux côtés d'une part dans la gorge (12) des isolations (10, 11) et d'autre part dans la gorge (14) du tube (13) et dont la surface externe est alignée aussi bien avec le tube (13) qu'avec chacune des isolations (10,11).

2. Dispositif selon la revendication1, **caractérisée par le fait que** la surface périphérique des éléments d'ancrage (18) est de forme cylindrique.

3. Dispositif selon la revendication1, **caractérisée par le fait que** la surface périphérique des éléments d'ancrage (18) est oblique et donc de forme conique.

4. Dispositif selon la revendication 1 à 3, **caractérisée par le fait que** chaque élément d'ancrage (18) se compose de deux demi-coques pouvant être reliées entre elles.

5. Disposition selon la revendication1 à 4, **caractérisée par le fait que le** tube (13) est vissé sur les conducteurs (1,2).

6. Disposition selon la revendication1 à 4, **caractérisée par le fait que** le tube (13) est compressé sur les conducteurs (1,2).
